# EUROPÄISCHE PATENTSCHRIFT

(11) **EP 1 660 393 B1**
(45) Veröffentlichungstag und Bekanntmachung des Hinweises auf die Patenterteilung: **09.05.2007**
(21) Anmeldenummer: 04762723.7
(22) Anmeldetag: 28.08.2004
(51) Int. Cl.: B65G 43/02

(54) **EINRICHTUNG ZUR ÜBERWACHUNG EINER FÖRDERANLAGE**
CONTROL DEVICE FOR A CONVEYOR
DISPOSITIF DE CONTROLE D'UNE INSTALLATION DE CONVOYAGE

(30) Priorität: 03.09.2003 DE 10341038
(43) Veröffentlichungstag der Anmeldung: 31.05.2006
(73) Patentinhaber: Phoenix Conveyor Belt Systems GmbH, 07422 Bad Blankenburg (DE)
(72) Erfinder: SCHNELL, Wolfgang, 21079 Hamburg (DE)
(74) Vertreter: Finger, Karsten
(86) Internationale Anmeldenummer: PCT/DE2004/001899
(87) Internationale Veröffentlichungsnummer: WO 2005/023688

(56) Entgegenhaltungen:
- EP-B- 1 053 447
- WO-A-03/059789

## Beschreibung

Die Erfindung betrifft eine Einrichtung zur Überwachung einer Förderanlage, umfassend:
- einen Fördergurt aus elastomerem Werkstoff mit einer Tragseite für das Fördermaterial und einer Laufseite, wobei der Fördergurt insbesondere einen eingebetteten Festigkeitsträger (z.B. Stahlseile, Gewebe) aufweist;
- ein opto-elektronisches System, das die Gurtoberfläche, insbesondere die Tragseite, optisch erfasst, indem es Schäden während des Betriebes erkennt und bei Erreichen eines kritischen Zustandes des Fördergurtes die Anlage stillsetzt, um rechtzeitig Reparaturmaßnahmen einzuleiten;
- einen Prozessrechner, der mit dem opto-elektronischen System gekoppelt ist, zwecks Auswertung aller Daten, wobei der Prozessrechner insbesondere mit einer Antriebssteuerung in Verbindung steht;
- einen Encoder, der mit einem bewegbaren Teil der Förderanlage in Verbindung steht; sowie
- sonstige Anlagenteile, nämlich eine nicht angetriebene Trommel, Tragrollen, Traggerüste sowie gegebenenfalls weitere Bauteile.

Da Fördergurte in Minenanlagen oft die wichtigsten Teile der Anlage darstellen, deren Versagen häufig einen kompletten Produktionsstillstand bedeuten kann, werden Verfahren zur automatischen, kontinuierlichen Überwachung der Fördergurte verlangt. Neben den bekannten Verfahren der Schlitzüberwachung (DE 44 44 264 C2) und der Verbindungsüberwachung (EP 1 053 447 B1) sind auch Methoden zur Überwachung der gesamten Gurtoberfläche gefragt, um Verschleißschäden oder oberflächliche Beaufschlagungsschäden und deren Weiterentwicklung während des Betriebes zu erkennen und bei Erreichen eines kritischen Zustandes den Gurt still zu setzen oder rechtzeitig Reparaturmaßnahmen einzuleiten.

Zur Erreichung dieses Zieles wurde der Einsatz opto-elektronischer Systeme, insbesondere in Form elektronischer Kamerasysteme (Zeilenkamera oder Flächenkamera), vorgeschlagen, wobei insbesondere auf folgenden Stand der Technik verwiesen wird:
DE 100 29 545 A1
DE 101 00 813 A1
DE 101 29 091 A1
DE 101 40 920 A1
EP 1 187 781 B1
EP 1 222 126 B1

Diese opto-elektronischen Systeme generieren Bilder von der zu überwachenden Gurtoberfläche. Eine automatische Auswertung und Beurteilung der so gewonnenen Bildinformation ist aber sehr schwierig, insbesondere dann, wenn die zeitliche Veränderung diskreter Zonen der Fördergurtoberfläche erfasst werden soll. Es sind zwar Methoden beschrieben worden, mit deren Hilfe es gelingt, bestimmte Strukturen der Gurtoberfläche, beispielsweise Spleiße (Verbindungen), mit einer gewissen Wahrscheinlichkeit zu identifizieren. Um aber eine wirksame automatische Überwachung des gesamten Gurtes durchführen zu können, ist die millimetergenaue Lokalisierung jeder beliebigen Stelle des Gurtes erforderlich, da nur so mit Hilfe automatischer Bildverarbeitungssoftware eine Verfolgung der Schadensentwicklung über einen gewissen Zeitraum bewerkstelligt werden kann.

In der Offenlegungsschrift WO 03/059789 A2 wird eine Einrichtung zur Überwachung einer Förderanlage beschrieben, bei der ein bewegbares Teil der Förderanlage mit einem Encoder versehen ist.

Die Aufgabe der Erfindung besteht nun darin eine gattungsgemäße Einrichtung bereit zu stellen, bei der im Rahmen von Großförderanlagen die millimetergenaue Lokalisierung jeder beliebigen Stelle der Fördergurte möglich ist, wobei die detektierbare Genauigkeit besser als ± 1 mm sein soll.

Gelöst wird diese Aufgabe gemäß Kennzeichen des Patentanspruches 1 dadurch, dass
- der gesamte Fördergurt in einem Abstand von 10 m bis 500 m Länge in endliche Abschnitte unterteilt ist, wobei jeder Abschnitt mit einer eindeutigen Adresse versehen ist, so dass sich eine Abschnittsmarkierung bildet, wobei die Detektion der Adresse der jeweiligen Abschnittsmarkierung mittels einer ersten Abtasteinheit berührungslos erfolgt;
- die Abschnitte jeweils durch eine Startmarkierung begrenzt sind, wobei die Detektion der jeweiligen Startmarkierung mittels einer zweiten Abtasteinheit ebenfalls berührungslos erfolgt;
- ein bewegbares Teil der Förderanlage mit einem Encoder versehen ist; und dass
- die erste und zweite Abtasteinheit sowie der Encoder mit dem Prozessrechner gekoppelt sind.

Zweckmäßige Ausgestaltungen der erfindungsgemäßen Einrichtung sind in den Patentansprüchen 2 bis 13 genannt.

Die Erfindung wird nun anhand von zwei Ausführungsbeispielen unter Bezugnahme auf schematische Zeichnungen erläutert. Es zeigen:
- Fig. 1: eine Einrichtung mit Encoder, der vom Fördergurt selbst mittels Reibradkupplung angetrieben wird;
- Fig. 2: eine Einrichtung mit Encoder, der direkt über die Achse einer nicht angetriebenen Trommel angetrieben wird.

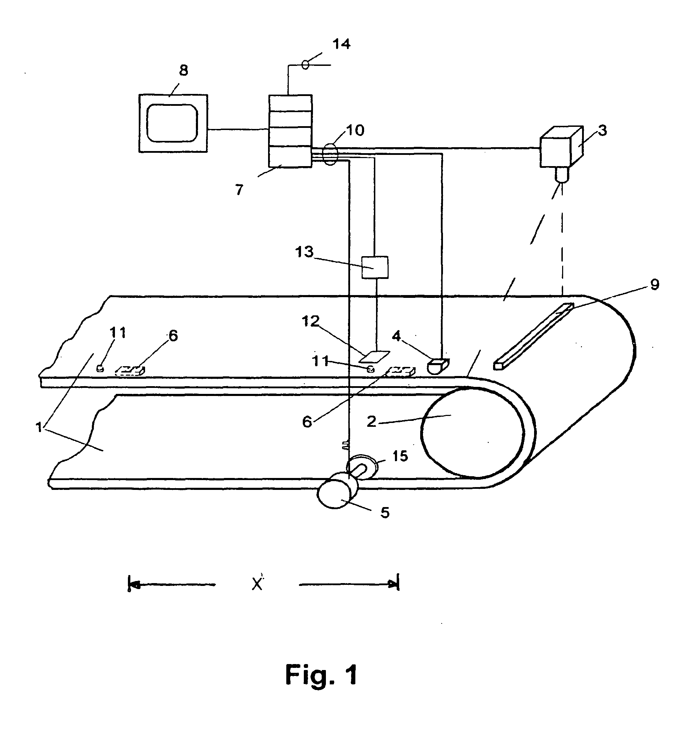

Nach Fig. 1 erfasst das opto-elektronische System **3** in Form einer Zeilenkamera die gesamte Breite der Tragseite des Fördergurtes **1,** und zwar unter Einsatz einer Beleuchtung **9.** Hinsichtlich Details derartiger opto-elektronischer Systeme wird auf den eingangs zitierten Stand der Technik verwiesen.

Zwei Startmarkierungen **6** umfassen bzw. begrenzen einen endlichen Abschnitt X des Fördergurtes **1.** Die Länge eines jeden Abschnittes beträgt 10 m bis 500 m, insbesondere unter dem Aspekt jeweils gleicher Längen.

Hinsichtlich der Startmarkierung **6** kommen folgende Varianten zum Einsatz:
- Die Startmarkierung ist durch wenigstens eine Kerbe, einen Farbstreifen, eine Reflexionszone, ein Metallteilchen oder einen Permanentmagneten gebildet.
- Die Startmarkierung ist ein Code, insbesondere unter dem Gesichtspunkt einer mechanischen, optischen, magnetischen, elektrisch leitenden oder radioaktiven Erfassung. Der Code ist wiederum vorzugsweise ein Barcode oder barcodeähnlich strukturiert. Auch kann der Code aus kleinen Dauermagneten bestehen, insbesondere in Form einer Reihenanordnung.

Die Detektion der jeweiligen Startmarkierung **6** erfolgt mittels einer Abtasteinheit, insbesondere in Form eines Lesekopfes **4,** berührungslos. Es ist dabei ausreichend, wenn eine einzige Abtasteinheit sämtliche Startmarkierungen detektiert.

Jeder Abschnitt X ist mit einer eindeutigen Adresse versehen, so dass sich eine Abschnittsmarkierung bildet. Die Eindeutigkeit wird durch eine Abschnittsnummerierung (z.B. 1, 2, 3 etc.) hergestellt.

Die Adresse der Abschnittsmarkierung ist hier ein Transponder **11.** Die Abtasteinheit, die die Detektion ebenfalls berührungslos vornimmt, umfasst eine Antenne **12** und ein Transponderlesegerät **13.** Ansonsten wird hier auf den allgemeinen Stand der Transpondertechnologie verwiesen.

Die Adresse der Abschnittsmarkierung kann auch diejenigen Varianten erfassen, die in Verbindung mit der Startmarkierung bereits erwähnt worden sind, wobei dann die Abtasteinheit ebenfalls ein Lesekopf ist, vorzugsweise im Rahmen eines gemeinsamen Detektionssystems von Start- und Abschnittsmarkierung.

Die Adresse der Abschnittsmarkierung sowie die Startmarkierung befinden sich innerhalb der Tragseite des Fördergurtes **1** in dessen Randbereich. Dabei ist es von Vorteil, wenn insbesondere der Transponder vollständig in elastomerem Werkstoff eingebettet ist. Dies gilt auch bei Verwendung eines Codes, und zwar in Form einer codierten Matrix (DE 100 17 473 A1).

Die Adresse der Abschnittsmarkierung und die Startmarkierung **6** sind hier separate Markierungssysteme, wobei sich die Adresse der Abschnittsmarkierung vorteilhafterweise in der Nähe der Startmarkierung befindet. Dabei ist es unerheblich, ob die Adresse in Bezug auf die Laufrichtung des Fördergurtes vor oder nach der Startmarkierung angeordnet ist.

Die exakte Ortsbestimmung zwischen den Markierungen erfolgt mit Hilfe eines Encoders **5,** der vom Fördergurt **1** selbst, zum Beispiel mittels Reibradkupplung **15,** angetrieben wird. Der Encoder liefert für eine bestimmte Wegstrecke eine bestimmte Anzahl von elektrischen Impulsen. Diese Impulse werden mittels eines Zählers im Prozessrechner **7** erfasst und ergeben zusammen mit der Abschnittsmarkierung und der Adresse des Gurtabschnitts eine exakte Ortsinformation für jede Stelle des zu überwachenden Fördergurtes. Die Genauigkeit der Ortsbestimmung hängt von der Auswahl des Encoders (Anzahl der Impulse für eine bestimmte Wegstrecke) und der Genauigkeit der Bestimmung der Abschnittsmarkierung ab und kann sehr hoch sein. Genauigkeiten von einigen Zehntel Millimetern sind leicht erreichbar.

Die so gewonnene Ortsinformation wird in einem Prozessrechner **7** mit der Bildinformation des opto-elektronischen Systems **3** per Software verknüpft und bildet so die Basis für eine automatisierte Bildauswertung, mit deren Hilfe die Änderung der Beschaffenheit eines jeden Punktes der Gurtoberfläche erfasst werden kann. Dadurch wird eine erhebliche Datenreduktion möglich, da nur die Daten weiterverarbeitet werden müssen, die eine signifikante Änderung des Gurtzustands beschreiben.

Bei einer Überwachung des Fördergurtes **1** im laufenden Förderbetrieb ist es auch möglich, den Prozessrechner **7** mittels einer DFÜ-Leitung **14** (**D**aten**F**ern**Ü**betragung) mit der Antriebssteuerung zu verbinden und bei Erkennung schwerwiegender Defekte die Anlage still zu setzen. Außerdem ist es möglich, mittels Datenfernübertragung (z.B. Internet) das Ergebnis der Gurtinspektion an jeden beliebigen Ort auf der Erde zu übertragen, an dem die nötigen Empfangseinrichtungen vorhanden sind.

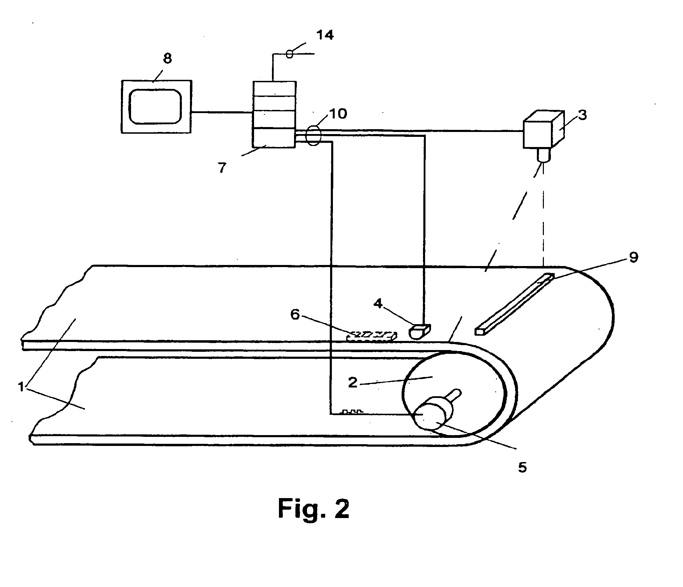

Nach dem Ausführungsbeispiel gemäß Fig. 2 bilden die Adresse der Abschnittsmarkierung und die Startmarkierung **6** ein einheitliches Markierungssystem, beispielsweise in Form eines Codes in Streifenform. Die gemeinsame Abtasteinheit ist ein Lesekopf **4.** Der Encoder **5** wird hier über die Achse einer nicht angetriebenen Trommel **2** angetrieben. Hinsichtlich weiterer Einrichtungsdetails wird auf das Ausführungsbeispiel gemäß Fig. 1 verwiesen.

Der Encoder kann beispielsweise ein Multipolencoder (DE 203 12 808 U1) oder ein opto-elektronischer Encoder sein. Diesbezüglich wird auf den allgemeinen Stand der Encodertechnologie verwiesen.

Auch wenn in den Fig. 1 und 2 die opto-elektronische Erfassung der Tragseite des Fördergurtes dargestellt wird, so kann diese Konzeption auch auf die Beobachtung der Laufseite angewandt werden (DE 101 00 813 A1).

### Bezugszeichenliste

- 1: Fördergurt
- 2: nicht angetriebene Trommel (Umkehr- bzw. Umlenktrommel)
- 3: opto-elektronisches System
- 4: Lesekopf für Startmarkierung und gegebenenfalls Adresse
- 5: Encoder
- 6: Startmarkierung (Triggermarke) und gegebenenfalls Adresse der Abschnittsmarkierung
- 7: Prozessrechner
- 8: Monitor
- 9: Beleuchtung
- 10: Informationssammelstelle
- 11: Transponder
- 12: Antenne
- 13: Transponderlesegerät
- 14: DFÜ-Leitung
- 15: Reibrad für den Encoderantrieb
- X: Abschnitt des Fördergurtes

## Patentansprüche

1. Einrichtung zur Überwachung einer Förderanlage, umfassend:
- einen Fördergurt (1) aus elastomerem Werkstoff mit einer Tragseite für das Fördermaterial und einer Laufseite, wobei der Fördergurt insbesondere einen eingebetteten Festigkeitsträger aufweist;
- ein opto-elektronisches System (3), das die Gurtoberfläche, insbesondere die Tragseite, optisch erfasst, indem es Schäden während des Betriebes erkennt und bei Erreichen eines kritischen Zustandes des Fördergurtes die Anlage stillsetzt, um rechtzeitig Reparaturmaßnahmen einzuleiten;
- einen Prozessrechner (7), der mit dem opto-elektronischen System (3) gekoppelt ist, zwecks Auswertung aller Daten, wobei der Prozessrechner insbesondere mit einer Antriebssteuerung in Verbindung steht;
- einen Encoder (5), der mit einem bewegbaren Teil der Förderanlage in Verbindung steht; sowie
- sonstige Anlagenteile, nämlich eine nicht angetriebene Trommel (2), Tragrollen, Traggerüste sowie gegebenenfalls weitere Bauteile;
**dadurch gekennzeichnet, dass**
- der gesamte Fördergurt (1) in einem Abstand von 10 m bis 500 m Länge in endliche Abschnitte (X) unterteilt ist, wobei jeder Abschnitt mit einer eindeutigen Adresse versehen ist, so dass sich eine Abschnittsmarkierung bildet, wobei die Detektion der Adresse der jeweiligen Abschnittsmarkierung mittels einer ersten Abtasteinheit berührungslos erfolgt;
- die Abschnitte (X) jeweils durch eine Startmarkierung (6) begrenzt sind, wobei die Detektion der jeweiligen Startmarkierung mittels einer zweiten Abtasteinheit ebenfalls berührungslos erfolgt; und dass
- die erste und zweite Abtasteinheit sowie der Encoder (5) mit dem Prozessrechner (7) gekoppelt sind.

2. Einrichtung nach Anspruch 1, **dadurch gekennzeichnet, dass** sich die Adresse der Abschnittsmarkierung sowie die Startmarkierung (6) innerhalb der Gurtoberfläche, insbesondere innerhalb der Tragseite, in dessen Randbereich befinden.

3. Einrichtung nach Ansprüch 1 oder 2, **dadurch gekennzeichnet, dass** die Adresse der Abschnittsmarkierung und die Startmarkierung (6) separate Markierungssysteme sind.

4. Einrichtung nach Anspruch 3, **dadurch gekennzeichnet, dass** sich die Adresse der Abschnittsmarkierung in der Nähe der Startmarkierung (6) befindet.

5. Einrichtung nach Ansprüch 1 oder 2, **dadurch gekennzeichnet, dass** die Adresse der Abschnittsmarkierung und die Startmarkierung (6) ein einheitliches Markierungssystem bilden.

6. Einrichtung nach einem der Ansprüche 1 bis 5, insbesondere in Verbindung mit Anspruch 3 oder 4, **dadurch gekennzeichnet, dass** die Adresse der Abschnittsmarkierung ein Transponder ist, wobei die erste Abtasteinheit eine Antenne (12) und ein Transponderlesegerät (13) umfasst.

7. Einrichtung nach einem der Ansprüche 1 bis 5, **dadurch gekennzeichnet, dass** die Adresse der Abschnittsmarkierung und/oder die Startmarkierung (6) durch wenigstens eine Kerbe, einen Farbstreifen, eine Reflexionszone, ein Metallteilchen oder einen Permanentmagneten gebildet ist/sind.

8. Einrichtung nach einem der Ansprüche 1 bis 5, **dadurch gekennzeichnet, dass** die Adresse der Abschnittsmarkierung und/oder die Startmarkierung (6) ein Code ist, insbesondere unter dem Gesichtspunkt einer mechanischen, optischen, magnetischen, elektrisch leitenden oder radioaktiven Erfassung.

9. Einrichtung nach Anspruch 8, **dadurch gekennzeichnet, dass** der Code ein Barcode oder barcodeähnlich strukturiert ist.

10. Einrichtung nach Anspruch 8, **dadurch gekennzeichnet, dass** der Code aus kleinen Dauermagneten besteht, insbesondere in Form einer Reihenanordnung.

11. Einrichtung nach einem der Ansprüche 7 bis 10, **dadurch gekennzeichnet, dass** die erste und zweite Abtasteinheit ein gemeinsames Detektionssystem sind, insbesondere in Form eines Lesekopfes (4).

12. Einrichtung nach einem der Ansprüche 1 bis 11, **dadurch gekennzeichnet, dass** der Encoder (5) vom Fördergurt (1) selbst angetrieben wird.

13. Einrichtung nach einem der Ansprüche 1 bis 11, **dadurch gekennzeichnet, dass** der Encoder (5) über die Achse einer nicht angetriebenen Trommel (2) angetrieben wird.

## Claims

1. Device for monitoring a conveyor installation, comprising:
- a conveyor belt (1) made of elastomer material with a carrying side for the material being conveyed and a running side, the conveyor belt exhibiting in particular an embedded strength member;
- an opto-electronic system (3) which optically scans the surface of the belt, in particular the carrying side, in that it detects damage during operation and when the conveyor belt reaches a critical state brings the installation to a standstill in order to initiate repair measures in good time;
- a process computer (7) which is coupled to the opto-electronic system (3), in order to evaluate all the data, the process computer in particular being in communication with a drive controller;
- an encoder (5) which is in communication with a moving part of the conveyor installation, and
- other installation parts, namely a non-driven drum (2), supporting rollers, supporting frames and possibly further components;
**characterised in that**
- at an interval from 10 m to 500 m in length the entire conveyor belt (1) is subdivided into endless portions (X), each portion being provided with a unique address so that a portion mark is formed, the address of the respective portion mark being detected without contact by means of a first scanning unit;
- the portions (X) are each bounded by a start mark (6), the respective start mark again being detected without contact by means of a second scanning unit; and **in that**
- the first and second scanning units and the encoder (5) are coupled to the process computer (7).

2. Device according to claim 1, **characterised in that** the address of the portion mark and the start mark (6) are located within the surface of the belt, in particular within the carrying side, in the region of its edge.

3. Device according to claim 1 or 2, **characterised in that** the address of the portion mark and the start mark (6) are separate marking systems.

4. Device according to claim 3, **characterised in that** the address of the portion mark is located in the vicinity of the start mark (6).

5. Device according to claim 1 or 2, **characterised in that** the address of the portion mark and the start mark (6) form a unified marking system.

6. Device according to one of claims 1 to 5, in particular in conjunction with claim 3 or 4, **characterised in that** the address of the portion mark is a transponder, the first scanning unit comprising an antenna (12) and a transponder reading device (13).

7. Device according to one of claims 1 to 5, **characterised in that** the address of the portion mark and/or the start mark (6) is/are formed by at least a notch, a coloured stripe, a reflective zone, a small piece of metal or a permanent magnet.

8. Device according to one of claims 1 to 5, **characterised in that** the address of the portion mark and/or the start mark (6) is a code, in particular from the viewpoint of mechanical, optical, magnetic, electrically conductive or radioactive detection.

9. Device according to claim 8, **characterised in that** the code is a bar code or structured like a bar code.

10. Device according to claim 8, **characterised in that** the code consists of small permanent magnets, in particular in the form of a row arrangement.

11. Device according to one of claims 7 to 10, **characterised in that** the first and second scanning units are a common detection system, in particular in the form of a reading head (4).

12. Device according to one of claims 1 to 11, **characterised in that** the encoder (5) is driven by the conveyor belt (1) itself.

13. Device according to one of claims 1 to 11, **characterised in that** the encoder (5) is driven by means of the shaft of a non-driven drum (2).

## Revendications

1. Dispositif de contrôle d'une installation de convoyage comprenant :
- une bande de convoyeur (1) en un matériau élastomère avec un côté porteur pour le matériel à transporter et un côté de roulement, la bande de convoyeur présentant notamment un support de résistance inséré ;
- un système opto-électronique (3) détectant optiquement la surface de la bande, notamment le côté porteur, en reconnaissant les détériorations pendant le fonctionnement et en arrêtant l'installation lors de l'atteinte d'un état critique de la bande de convoyeur afin de mettre en place les mesures de réparation dans les délais ;
- un ordinateur industriel (7), accouplé au système opto-électronique (3) dans le but de l'analyse de toutes les données, l'ordinateur industriel étant notamment en relation avec une commande d'entraînement ;
- un encodeur (5) qui est en relation avec une partie mobile de l'installation de convoyage ;
- ainsi que d'autre pièces d'installation, à savoir un tambour non entraîné (2), des rouleaux porteurs, des infrastructures et le cas échéant d'autres pièces de construction.
**caractérisé en ce que**
toute la bande de convoyeur (1), sur une distance d'une longueur de 10 m à 500 m, est répartie en sections finies (X), chaque section étant pourvue d'une adresse définie, de sorte qu'il se forme un repère de la section, la détection de l'adresse du repère respectif de la section étant réalisée à l'aide d'une première unité d'analyse sans contact ;
- les sections (X) sont respectivement délimitées par un repère de départ (6), la détection du repère de départ respectif étant également effectuée sans contact au moyen d'une seconde unité d'analyse; et que
- la première et la seconde unités d'analyse ainsi que l'encodeur (5) sont accouplés à l'ordinateur industriel (7).

2. Dispositif selon la revendication 1 **caractérisé en ce que** l'adresse du repère de la section ainsi que le repère de départ (6) se trouvent dans la bande de convoyeur, en particulier dans le côté porteur, dans sa zone marginale.

3. Dispositif selon la revendication 1 ou 2, **caractérisé en ce que** l'adresse du repère de la section et le repère de départ (6) sont des systèmes de repérage séparés.

4. Dispositif selon la revendication 3, **caractérisé en ce que** l'adresse du repérage de section se trouve à proximité du repère de départ (6).

5. Dispositif selon la revendication 1 ou 2, **caractérisé en ce que** l'adresse du repère de la section ainsi que le repère de départ (6) forment un système de repérage unitaire.

6. Dispositif selon l'une des revendications 1 à 5, notamment en relation avec la revendication 3 ou 4, **caractérisé en ce que** l'adresse du repère de la section est un transpondeur, la première unité d'analyse comprenant une antenne (12) et un lecteur de transpondeur (13).

7. Dispositif selon l'une des revendications 1 à 5, **caractérisé en ce que** l'adresse du repère de la section et / ou le repère de départ (6) est / sont formé (s) par au moins une entaille, une signalisation couleur, une zone de 0 réflexion, une particule métallique ou un aimant permanent.

8. Dispositif selon l'une des revendications 1 à 5, **caractérisé en ce que** l'adresse du repère de la section et / ou le repère de départ (6) est un code, en particulier du point de vue d'une détection mécanique, optique, magnétique, électriquement conductrice ou radioactive.

9. Dispositif selon la revendication 8, **caractérisé en ce que** le code est structuré sous la forme d'un code barres ou similaire à un code barres.

10. Dispositif selon la revendication 8, **caractérisé en ce que** le code est constitué d'un petit aimant permanent, notamment sous la forme d'une rangée.

11. Dispositif selon l'une des revendications 7 à 10, **caractérisé en ce que** la première et la seconde unités d'analyse sont un système de détection commun, notamment sous la forme d'une tête de lecture (4).

12. Dispositif selon l'une des revendications 1 à 11, **caractérisé en ce que** l'encodeur (5) est entraîné par la bande de convoyeur (11) elle même.

13. Dispositif selon l'une des revendications 1 à 11, **caractérisé en ce que** l'encodeur (5) est entraîné via l'axe d'un tambour non entraîné (2).
